# EUROPEAN PATENT SPECIFICATION

(11) **EP 2 796 629 B1**
(45) Date of publication and mention of the grant of the patent: **24.02.2016**
(21) Application number: 14164971.5
(22) Date of filing: 16.04.2014
(51) Int. Cl.: E03F 5/04, F16K 15/03

(54) **Connection for a drainage well**
Verbindung für eine Abwasser-Sammel-behälter
Connection pour un réservoir pour eaux usées

(30) Priority: 23.04.2013 NL 2010689
(43) Date of publication of application: 29.10.2014
(73) Proprietor: T.B.S. Soest B.V., 3762 EC Soest (NL)
(72) Inventor: Vas, Jan Ivan, 3766 XC Soest (NL)
(74) Representative: Haan, Raimond

(56) References cited:
- NL-C2- 1 005 621

## Description

The invention relates to a connection for a drainage well, a gully or the like. Such a drainage well connection is generally manufactured from cast iron and received in anchoring manner in one of the poured concrete peripheral walls of the drainage well. The connection comprises a housing with an outlet pipe stub for connection to a for instance PVC outlet pipe to a sewer system, and a pre-chamber which forms the water flow connection between the outlet pipe stub and the interior of the drainage well. The connection further comprises a stench trap valve which reaches to a level below the outlet pipe stub. With the water in the drainage well the stench trap valve forms a stench seal and ensures that sewer air present in the outlet pipe cannot escape upward via the valve and to the surrounding area via the drainage well and the grating thereof.

Such connections are incorporated in gullies which are supplied by applicant, and such a connection is for instance described in the Netherlands patent NL 1005621 of applicant. This patent shows a connection according to the preamble of claim 1.

In accordance with standards the stench trap valve has to be removable. Known gully connections with a removable stench trap valve for instance apply a hook in which the valve is suspended. Drawbacks of such a connection are that the valve can easily come to lie askew and does not then provide sufficient sealing. It is also disadvantageous that the valve can only be placed after the gully has been formed and therefore forms a separate component until that time. This is because these gullies are usually manufactured from poured concrete in negative form, wherein the connection is set in negative form in the mould. If the valve were then already placed, it would then fall out of the connection. The valve also detaches easily from the gully during storage and transport, which results in loss and/or requires extra vigilance and effort on the part of staff in order to prevent and remedy this. Finally, it frequently occurs that the valve comes to be suspended at an angle in the position of use, for instance as a result of contact with a suction hose with which the sand trap of the relevant gully has been suctioned empty, during raising of this suction hose.

The gully connection described in NL 1005621 was already less susceptible to becoming detached than the stench trap valves known up until then. It is however found to still occasionally occur in practice that the stench trap valve detaches from its suspension points in the housing and comes to lie on the bottom of the gully. The stench trap valve can then no longer fulfil its stench-sealing function.

An object of the present invention is to provide a connection for a drainage well, wherein said drawbacks do not occur, or at least do so to lesser extent.

Said object is achieved with the connection for a drainage well, a gully or the like according to claim 1.

Because the inserting grooves have a width Bₛ which is greater than the width Bₒ of the suspending parts but smaller than the length Lₒ of the suspending parts, i.e. Bₒ < Bₛ < Lₒ, the suspending parts can only be inserted into and passed through the inserting grooves in a substantially straight orientation. In this substantially straight orientation the elongate suspending parts are carried into and through the inserting grooves substantially in their longitudinal direction. In this orientation of the suspending parts arranged on either side of the stench trap valve, the stench trap valve itself is oriented substantially in longitudinal direction of the inserting groove. Because the stench trap valve can only be carried through the inserting groove with its suspending parts in a substantially straight orientation, the risk of undesired detachment of the stench trap valve from the pre-chamber is greatly reduced. The valve is thus mounted in removable manner while undesired removal is prevented.

According to a preferred embodiment, the inserting groove is arranged at an angle β of 65°-115° relative to a front wall of the pre-chamber. The stench trap valve can hereby likewise only be inserted with an orientation relative to the front wall of the pre-chamber substantially corresponding to that of the inserting groove, this being an orientation which does not generally occur during normal use. Undesired detaching of the stench trap valve is hereby prevented.

According to a further preferred embodiment, the inserting groove, at the outer end lying opposite the wall of the pre-chamber, lies adjacently of a first rotation chamber in which the substantially elongate suspending part can be rotatably received.

According to yet another preferred embodiment, the first rotation chamber is connected to a second rotation chamber in which the substantially elongate suspending part can be rotatably received such that the suspending part is displaceable between the first rotation chamber and the second rotation chamber. Through the use of two rotation chambers the stench trap valve must always displace from the second rotation chamber via the first rotation chamber before it can be removed from the drainage well connection via the inserting groove. Undesired detaching of the stench trap valve is hereby counteracted.

The second rotation chamber is moreover placed such that in an operative position the stench trap valve rests therein and then in a substantially vertical position connects closely to the upper inner wall of the pre-chamber such that the stench trap valve prevents stench passing from the sewer via the outlet pipe and the drainage well connection via the drainage well to the surrounding area. The inner surface of the upper wall of the pre-chamber and the edge parts of the stench trap valve lying above the suspending parts then form with their mutually facing surfaces a mutual fit, preferably a clamping fit or locking fit. The stench trap valve is bounded on the upper side by this fit in the vertical position of the stench trap valve which is enhanced by the weighted lower part, whereby it is impossible for the stench trap valve to displace to the higher first rotation chamber when the second rotation chamber is in a vertical position. The stench trap valve is thus prevented from becoming detached from the drainage well connection in this vertical position.

According to yet another preferred embodiment, the first rotation chamber and/or the second rotation chamber are substantially rotation-symmetrical and comprise an inner diameter greater than the length Lₒ of the suspending part. The suspending parts can hereby rotate in the rotation chambers, and the stench trap valve is tiltable in these positions.

According to yet another preferred embodiment, the rotation chambers are arranged at an angle relative to each other and the second rotation chamber is offset forward in the direction of the wall of the pre-chamber relative to the first rotation chamber. Because the rotation chambers are arranged offset relative to each other, an offset connection results between the two rotation chambers, this further precluding undesired detachment of the stench trap valve.

According to yet another preferred embodiment, the connection between the first rotation chamber and the second rotation chamber comprises a throughfeed channel. A channel further protects against undesired detachment of the stench trap valve.

According to yet another preferred embodiment, the throughfeed channel has a width B_{d} which is greater than the width Bₒ of the suspending part but smaller than the length Lₒ of the suspending part. This guarantees that the stench trap valve with the suspending parts on either side can only pass through this throughfeed channel in a determined desired orientation.

According to yet another preferred embodiment, the angle α enclosed between the longitudinal direction of the inserting groove and the throughfeed channel lies in the range between 25° and 155°. In order to enable displacement of the stench trap valve through this throughfeed channel from the second rotation chamber to the first rotation chamber the stench trap valve has to be moved obliquely rearward and upward, which is an operation which can on the one hand be performed easily by a workman but which on the other will not usually occur in operational conditions. The stench trap valve is protected still better by this measure against undesired detachment from the connection.

It is noted that the inserting groove is preferably arranged at an angle β of 65°-115° relative to the front wall of the pre-chamber. Because the inserting groove can lie at a non-right angle, it is possible to envisage the angle enclosed between the longitudinal direction of the inserting groove and the throughfeed channel being 90° or even more than 90°, while the throughfeed channel still retains an advantageous oblique position.

According to yet another preferred embodiment, the first rotation chamber comprises a closing chamber configured to receive a closing element which at least partially fills the first rotation chamber such that insufficient space remains in the first rotation chamber to enable a suspending part to be received therein. The closing element forms an obstacle which prevents undesired displacement of the stench trap valve from the second rotation chamber to the first rotation chamber. If this movement is bounded, it is impossible for the stench trap valve to detach from the connection.

According to yet another preferred embodiment, the closing element comprises an insert part insertable into the closing chamber and a head part, wherein the head part is configured to at least partially fill the first rotation chamber.

According to yet another preferred embodiment, the insert part of the closing element comprises one or more fins with which the insert part engages on the inner wall of the closing chamber.

Although a skilled person will be capable of proposing a plurality of length-width ratios of the suspending parts within the inventive concept, a length-width ratio of about 2:1 has been found particularly suitable. The reason for this is that a correct orientation enabling throughfeed of the stench trap valve through the inserting groove is on the one hand imposed, while on the other the 'limited' factor 2 keeps the size of the rotation chambers usable without having to increase the wall thickness of the connection too much.

Preferred embodiments of the present invention are further elucidated in the following description with reference to the drawing, in which:
Figure 1 shows a schematic view of a gully having incorporated therein a connection according to the invention;
Figure 2 shows a perspective view of the connection of figure 1 from the gully;
Figure 3 shows a perspective view of the connection of figure 1 from outside the gully;
Figure 4 shows a partially cut-away perspective detail view of the connection of figure 1 from the gully, wherein the stench trap valve has been removed;
Figures 5-9 show side views of successive stages of arranging a stench trap valve in a connection;
Figure 10 shows a perspective detail view of the connection from the gully, wherein the stench trap valve is in the position shown in figure 9;
Figure 11 shows a cross-sectional side view of a drainage well connection in operative situation;
Figure 12 is a detailed cross-sectional view of the drainage well connection shown in figure 11;
Figure 13 shows a cross-sectional side view in a maintenance situation, wherein a suction hose is fed through the connection into the outlet pipe and to the sewer; and
Figure 14 shows a schematic detail view of an alternative embodiment of the invention.

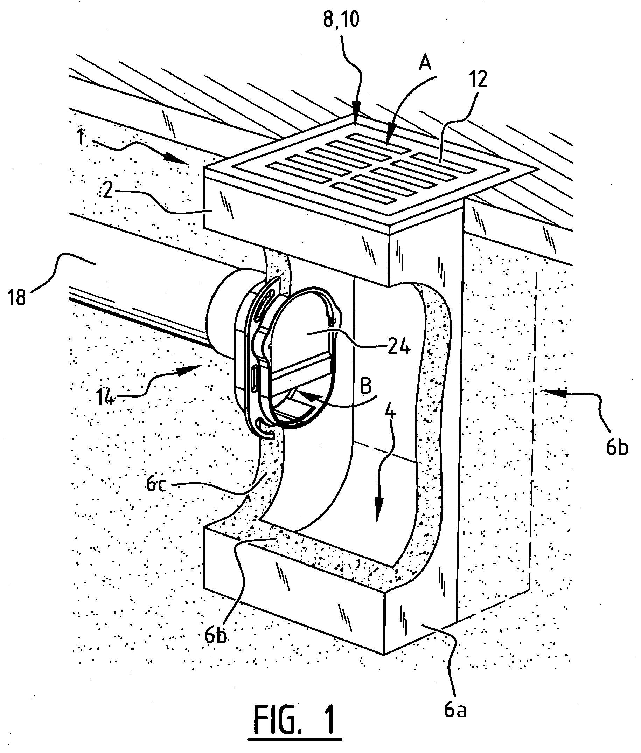

Figure 1 shows a gully 1 with a concrete body 2 which in fact forms a vessel bounded by a bottom 4 and bounded in horizontal direction by front wall 6a, side walls 6b and rear wall 6c. On the upper side the vessel is covered by a cast-iron assembly 8 comprising a cover 10 having a grating 12 therein. Water flows via grating 12 in the direction A from the road into gully 1.

Incorporated into rear wall 6c is a drainage well connection 14 which is anchored fixedly in the concrete of rear wall 6c and provided in the rear part with a pipe stub 16 in which an outlet pipe 18 debouching into the sewer can be arranged substantially watertightly using a rubber sealing ring (not shown).

Drainage well connection 14 also comprises a pre-chamber 20 formed as one whole housing with pipe stub 16 and provided on the outer side with an anchoring flange 22.

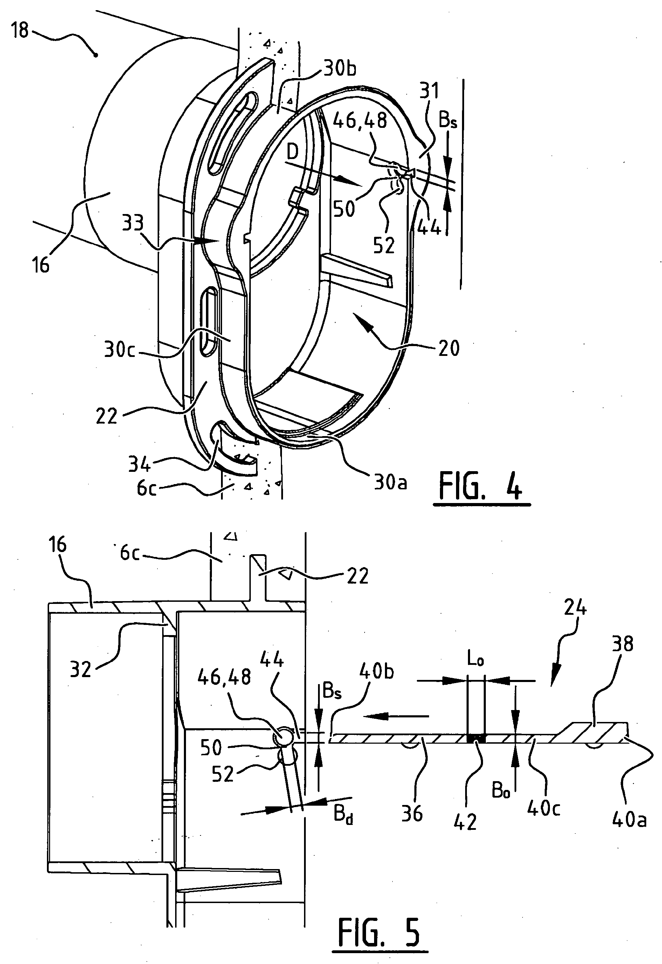

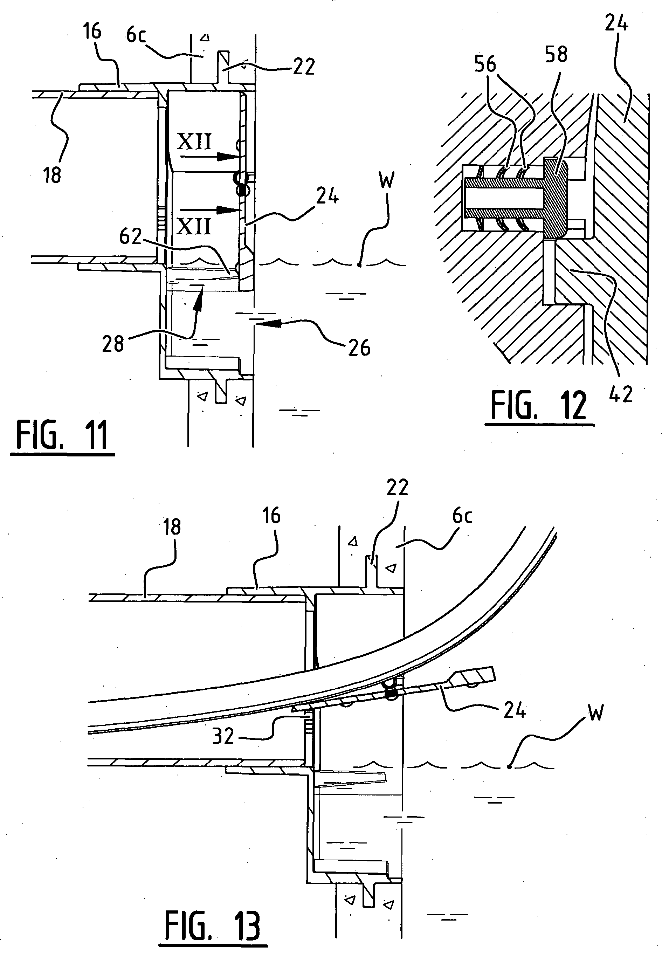

Connection 14 is provided on the inner side with a stench seal/stench trap valve 24 to be discussed below. This stench trap valve 24 extends to a position below the water surface W when there is no supply of water. This water surface W lies roughly level with the bottom of outlet pipe 18 in pipe stub 16. When water flows from direction A through grating 12 into gully 1, the water level in gully 1 will rise. The water will be discharged under stench trap valve 24 and via passages 26, 28 (see figure 11) in the direction B to outlet pipe 18 (see figure 1). The purpose of the stench trap valve 24 in drainage well connection 14 is to prevent transport of sewer air in direction D (figure 4).

Drainage well connection 14 is shown in detail in figures 2-4. Drainage well connection 14 is constructed substantially from three parts, i.e. pipe stub 16 and pre-chamber 20, which together form the housing, and valve 24 which can be arranged removably in the housing.

Pipe stub 16 is substantially circle-cylindrical, wherein the inner surface has a slight conicity in inward direction. The central axis of the circular curvature of the wall of pipe stub 16 coincides at least substantially with that of the circular curvature of upper wall 30b of pre-chamber 20. Provided close to the transition from pipe stub 16 to pre-chamber 20 are three stop protrusions 32 arranged at regular intervals in peripheral direction (figure 3) which prevent outlet pipe 18 sliding too far inward. This prevents outlet pipe 18 reducing the size of the outlet opening as shown with 26, 28 in figure 11 and moreover prevents the possibility of stench trap valve 24, to be further discussed below, no longer being removable for inspection or unblocking operations.

Pre-chamber 20 has a substantially cylindrical peripheral wall 30. This peripheral wall 30 is provided on the underside with a circular lower wall 30a and on the upper side with a circular upper wall 30b. Extend therebetween are intermediate walls 30c.

The stench trap valve 24 is provided with a weighted lower part 38 which is configured to allow the stench trap valve 24 to tilt to a substantially vertical position. In this substantially vertical position a direct connection between the interior of pipe stub 16 and the interior of gully 1 is closed, whereby the stench trap valve 24 prevents stench from being allowed into the surrounding area from the sewer via outlet pipe 18 and drainage well connection 14, via the gully or drainage well.

The inner wall of the housing is provided with a valve stop 62 which prevents valve 24 tilting through the closing position. The inner surface of the upper wall of pre-chamber 20 and the edge parts of stench trap valve 24 lying above suspending parts 42 take respectively a concave and convex form, and with their mutually facing surfaces form a mutual fit, preferably a clamping fit or locking fit, which is enhanced in the situation of use by the weighted lower part 38.

A peripheral flange which functions as anchoring flange 22 runs around pre-chamber 20. This anchoring flange 22 not only lengthens the path leaking water has to follow in the unlikely event it should penetrate into the contact area between concrete and the outer surface of peripheral wall 30 of pre-chamber 20, but also ensures a firmer anchoring of connection 14 in this concrete. The thickened peripheral edge 13 of anchoring flange 22 provides for a further increase in the anchoring area and of the leakage path. Further improvement of the anchoring is provided by recesses 34. These recesses 34 are preferably elongate and of a sufficient length and size that they allow insertion of at least a number of fingers of a workman. Drainage well connection 14 is hereby easier to handle for a workman.

Connection 14 for a gully 1 according to the invention comprises suspending parts 42 which comprise a substantially elongate form and which comprise a length Lₒ extending in longitudinal direction along a side edge of the stench trap valve and a width Bₒ extending over the thickness of the stench trap valve. Because connection 14 further comprises inserting grooves 44 having a width Bₛ which is greater than the width Bₒ of the suspending parts but smaller than the length Lₒ of the suspending parts, it is ensured that suspending parts 42 can only be inserted into and passed through inserting grooves 44 in a substantially straight orientation. Because stench trap valve 24 with its suspending parts 42 can only be carried through inserting groove 44 in a substantially straight orientation, the risk of undesired detaching of stench trap valve 24 from pre-chamber 20 is greatly reduced. Valve 24 is thus mounted in removable manner, while undesired removal is prevented.

The successive steps of arranging a stench trap valve 24 in a drainage well connection 14 are now elucidated in stepwise manner with reference to figures 5-9. Additional measures are moreover elucidated which contribute toward the further reduction of the risk of undesired removal of stench trap valve 24.

Because inserting grooves 44 have a width Bₛ which is greater than the width Bₒ of suspending parts 42 but smaller than the length Lₒ of suspending parts 42, i.e. Bₒ < Bₛ < Lₒ, suspending parts 42 can only be inserted into and passed through the inserting grooves in a substantially straight orientation. Figure 5 shows the substantially straight orientation of stench trap valve 24 and the elongate suspending parts 42 arranged on either side thereof in which they can be inserted into and passed through inserting groove 44.

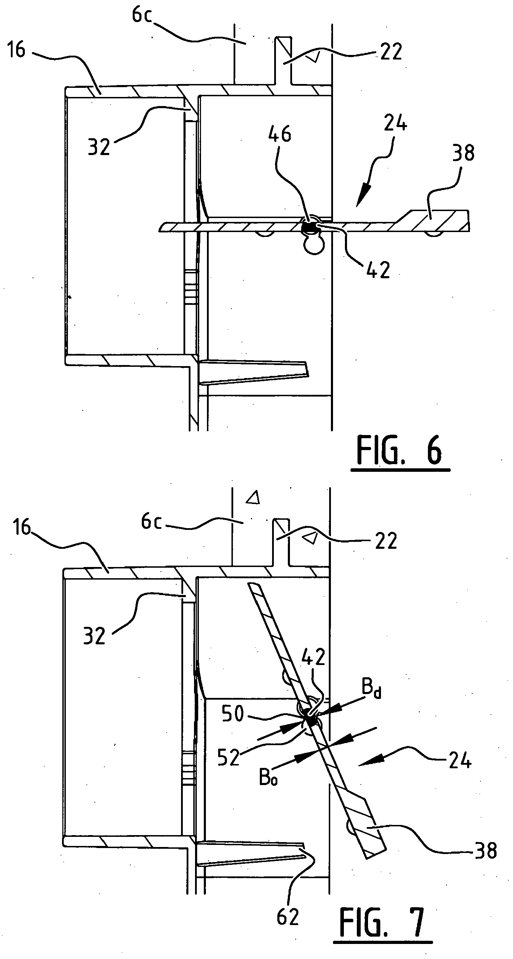

When suspending parts 42 are guided through inserting groove 44, they arrive in a first rotation chamber 46 (figure 6). In the shown embodiment the first rotation chamber 46 has a rotation-symmetrical form with a diameter which is greater than the length of suspending part 42. Suspending part 42 is hereby rotatable in the first rotation chamber 46 to an oblique position corresponding to the position of stench trap valve 42 shown in figure 7, wherein the suspending part is then still situated wholly in the first rotation chamber 46.

In figure 7 stench trap valve 42 is situated in throughfeed channel 50 which forms a connection between first rotation chamber 46 and second rotation chamber 52. It is noted that this throughfeed channel 50 preferably has a width B_{d} which is greater than the width Bₒ of the suspending part but smaller than the length Lₒ of the suspending part. This once again guarantees that stench trap valve 24 with suspending parts 42 on either side can only pass through this throughfeed channel 50 in a determined desired orientation, as shown in figure 7.

It is noted that throughfeed channel 50 is a particularly advantageous embodiment because it considerably reduces the chance of undesired detachment of stench trap valve 24 from its suspending part. It is however also possible to envisage the first rotation chamber 46 and second rotation chamber 52 connecting directly to each other.

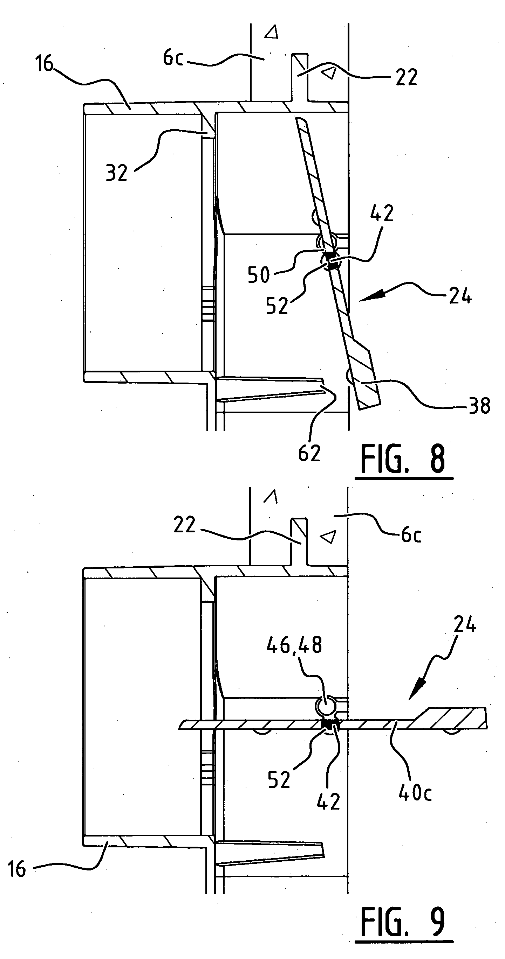

Figure 8 shows the situation in which stench trap valve 24 has left throughfeed channel 50 and is situated wholly in second rotation chamber 52. This second rotation chamber is preferably rotation-symmetrical, with a diameter greater than the length of suspending part 42. Suspending part 42 is hereby rotatable in second rotation chamber 52, for instance to the open position shown in figure 9, whereby a suction hose can be fed through into outlet pipe 18 and to the sewer for the purpose of maintenance (figure 13).

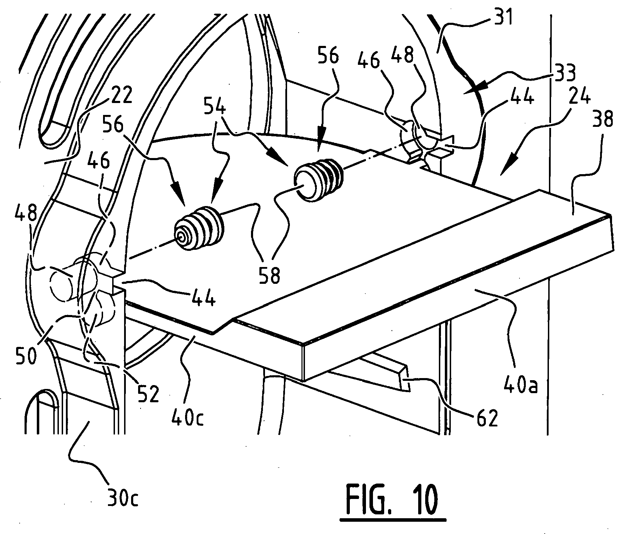

The orientation of stench trap valve 24 in figure 9 is shown in perspective view in figure 10 in order to further elucidate an additional very advantageous measure against undesired detachment of stench trap valve 24. First rotation chamber 46 is provided for this purpose with a closing chamber 48 in which a closing element 54 can be arranged. In the shown embodiment closing element 54 comprises an insertion part 56 with fins insertable into closing chamber 48, and a head part 58. The fins serve for engagement with the inner wall of closing chamber 48 and the head part is configured to at least partially fill first rotation chamber 46 such that insufficient space remains in first rotation chamber 46 to enable a suspending part 42 to be received therein. If in the situation shown in figure 10 the closing elements 54 are inserted into closing chambers 48, head parts 58 of closing elements 54 will thus prevent suspending parts 42 displacing from their position in second rotation chambers 52 back to first rotation chambers 46 (figure 12).

The wall of connection 14 has a thickened portion 33 to enable accommodation of closing chambers 48 (figure 10).

Closing elements 54 can be easily removed from closing chambers 48 by a workman using a tool such as a screwdriver should it ever be necessary to remove stench trap valve 24 from drainage well connection 14. Undesired detachment is prevented very effectively with this measure, while valve 24 remains relatively easy to remove.

It is noted that in the situation shown in figure 12, wherein stench trap valve 24 is in the substantially vertical operative position, side edge 40c of stench trap valve 24 extends along head part 58 of closing element 54 and prevents possible movement of closing element 54 out of closing chamber 48.

Because of the weighted lower part 38 the stench trap valve 24 will tilt in a normal position of use such that the stench trap valve rests against valve stop 62 in pre-chamber 20 and connects on the upper side in substantially stench-sealing manner to the upper edge of pre-chamber 20 (figures 1 and 11).

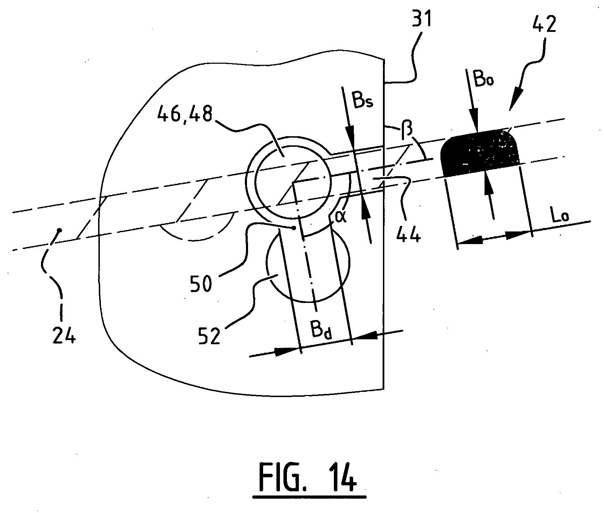

Figure 14 shows an alternative embodiment wherein inserting groove 44 and front wall 31 of peripheral wall 30 of pre-chamber 20 enclose an angle β of about 80°. This angle β makes it possible for throughfeed channel 50 and inserting groove 44 to be arranged at an angle α of about 90° or even more than 90° relative to each other, while throughfeed channel 50 still retains an advantageous oblique position.

The enlarged view of figure 14 clearly shows the inventive concept, which also applies to the embodiment shown in figures 1-13.

Suspending parts 42 are elongate, with a length Lₒ and a width Bₒ. Inserting groove 44 has a width Bₛ which is greater than the width Bₒ of suspending part 42 but smaller than the length Lₒ of suspending part 42. Owing to this relation Bₒ < Bₛ < Lₒ suspending part 42 can only be inserted into and passed through inserting groove 44 in the shown substantially straight orientation.

A corresponding relation, i.e. Bₒ < B_{d} < Lₒ, wherein B_{d} is the width of throughfeed channel 50, applies for the throughfeed channel 50 situated between the two rotation chambers 46, 48.

In the shown embodiment the first rotation chamber 46 and second rotation chamber 48 have a substantially rotation-symmetrical form with a diameter greater than the length Lₒ of suspending part 42. Suspending part 42 is hereby rotatable to a desired position in both rotation chambers 46, 48.

In an alternative embodiment (not shown) the angle β enclosed by inserting groove 44 and front wall 31 is more than 90°. Inserting groove 44 will hereby incline downward to some extent in the direction of front wall 31, which prevents dirt entering inserting groove 44.

Although they show preferred embodiments of the invention, the above described embodiments are intended only to illustrate the present invention and not to limit the scope of the invention in any way. The figures thus show a gully, while the invention can be applied to a wide diversity of drainage wells, including gullies, such as road or kerb gullies. When measures in the claims are followed by reference numerals, such reference numerals serve only to contribute toward understanding of the claims, but are in no way limitative of the scope of protection. The rights described are defined by the following claims, within the scope of which many modifications can be envisaged.

## Claims

1. Connection (14) for a drainage well (1), a gully or the like, comprising a housing with an outlet pipe stub (16) for connection to an outlet pipe (18) to a sewer system, and a pre-chamber (20) forming the water flow connection between the outlet pipe stub and the interior of the drainage well, the gully or the like and comprising a stench trap valve (24) reaching to a level below the outlet pipe stub and provided on either side with suspending parts (42) which lie horizontally in line with each other and with which the valve is mounted in tiltable and removable manner in receiving spaces in the inner surface of the pre-chamber accessible via inserting grooves,
**characterized in that**
- the suspending parts (42) comprise a substantially elongate form with a length Lₒ extending in longitudinal direction along a side edge of the stench trap valve and a width Bₒ extending over the thickness of the stench trap valve; and
- wherein the inserting grooves (44) have a width Bₛ which is greater than the width Bₒ of the suspending parts but smaller than the length Lₒ of the suspending parts.

2. Connection as claimed in claim 1, wherein the inserting groove is arranged at an angle β of 65°-115° relative to a front wall (31) of the pre-chamber (20).

3. Connection as claimed in claim 1 or 2, wherein the inserting groove (44), at the outer end lying opposite the wall (31) of the pre-chamber (20), lies adjacently of a first rotation chamber (46) in which the substantially elongate suspending part (42) can be rotatably received.

4. Connection as claimed in claim 3, wherein the first rotation chamber (46) is connected to a second rotation chamber (52) in which the substantially elongate suspending part (42) can be rotatably received such that the suspending part (42) is displaceable between the first rotation chamber (46) and the second rotation chamber (52).

5. Connection as claimed in claim 3 or 4, wherein the first rotation chamber (46) and/or the second rotation chamber (52) are substantially rotation-symmetrical and comprise an inner diameter greater than the length Lₒ of the suspending part (42).

6. Connection as claimed in claim 4 or 5, wherein the rotation chambers (46, 52) are arranged at an angle relative to each other and the second rotation chamber (52) is offset forward in the direction of the wall (31) of the pre-chamber (20) relative to the first rotation chamber (46).

7. Connection as claimed in any of the claims 4-6, wherein the connection between the first rotation chamber (46) and the second rotation chamber (52) comprises a throughfeed channel (50).

8. Connection as claimed in claim 7, wherein the throughfeed channel (50) has a width B_{d} which is greater than the width Bₒ of the suspending part (42) but smaller than the length Lₒ of the suspending part (42).

9. Connection as claimed in claim 7 or 8, wherein the angle α enclosed between the longitudinal direction of the inserting groove (44) and the throughfeed channel (50) lies in the range between 25° and 155°.

10. Connection as claimed in any of the claims 3-9, wherein the first rotation chamber (46) comprises a closing chamber (48) and is configured to receive a closing element which at least partially fills the first rotation chamber such that insufficient space remains in the first rotation chamber to enable a suspending part (42) to be received therein.

11. Connection as claimed in claim 10, wherein the closing element (54) comprises an insert part (56) insertable into the closing chamber (48) and a head part (58), and wherein the head part is configured to at least partially fill the first rotation chamber (46).

## Patentansprüche

1. Anschluss (14) für einen Abwasserbehälter (1), einen Gully oder dergleichen, umfassend ein Gehäuse mit einem Auslassrohrstutzen (16) zum Anschließen an ein Auslassrohr (18) zu einer Abflussrohranlage, und einen Vorraum (20), der die Wasserfließverbindung zwischen dem Auslassrohrstutzen und dem Innenraum des Abwasserbehälters, des Gullys oder dergleichen bildet, und umfassend ein Geruchsverschlussventil (24), welches bis zu einer Ebene unterhalb des Auslassrohrstutzens reicht und auf jeder Seite mit Aufhängeteilen (42) versehen ist, die horizontal in Linie miteinander liegen und mittels der das Ventil in neigbarer und entfernbarer Weise in Aufnahmeräumen in der Innenfläche des Vorraumes durch Einführungsnuten zugänglich angebracht ist,
**dadurch gekennzeichnet,**
- **dass** die Aufhängeteile (42) eine im Wesentlichen längliche Form mit einer Länge Lₒ, die sich in Längsrichtung längs der Seitenkante des Geruchsverschlussventils erstreckt, und einer Breite Bₒ umfassen, die sich über die Dicke des Geruchsverschlussventils erstreckt,
- und wobei die Einführungsnuten (44) eine Breite Bₛ aufweisen, die größer ist als die Breite Bₒ der Aufhängeteile, jedoch kleiner als die Länge Lₒ der Aufhängeteile.

2. Anschluss nach Anspruch 1, wobei die Einführungsnut unter einem Winkel β von 65° bis 115° in Bezug auf eine Vorderwand (31) des Vorraumes (20) angeordnet ist.

3. Anschluss nach Anspruch 1 oder 2, wobei die Einführungsnut (44), die am äußeren Ende gegenüber der Wand (31) des Vorraumes (20) liegt, einer ersten Drehkammer (46) benachbart liegt, in welcher der im Wesentlichen längliche Aufhängeteil (42) drehbar aufgenommen werden kann.

4. Anschluss nach Anspruch 3, wobei die erste Drehöffnung (46) mit einer zweiten Drehkammer (52) verbunden ist, in welcher der im Wesentlichen längliche Aufhängeteil (42) derart drehbar aufgenommen werden kann, dass der Aufhängeteil (42) zwischen der ersten Drehkammer (46) und der zweiten Drehkammer (52) verschiebbar ist.

5. Anschluss nach Anspruch 3 oder 4, wobei die erste Drehkammer (46) und/oder die zweite Drehkammer (52) im Wesentlichen rotationssymmetrisch sind und einen Innendurchmesser aufweisen, der größer ist als die Länge Lₒ des Aufhängeteiles (42).

6. Anschluss nach Anspruch 4 oder 5, wobei die Drehkammern (46, 52) unter einem Winkel in Bezug zueinander angeordnet sind und wobei die zweite Drehkammer (52) in Richtung der Wand (31) des Vorraumes (20) in Bezug auf die erste Drehkammer (46) versetzt ist.

7. Anschluss nach einem der Ansprüche 4 bis 6, wobei die Verbindung zwischen der ersten Drehkammer (46) und der zweiten Drehkammer (52) einen Durchlaufkanal (50) umfasst.

8. Anschluss nach Anspruch 7, wobei der Durchlaufkanal (50) eine Breite B_{d} aufweist, die größer ist als die Breite Bₒ des Aufhängeteiles (42), jedoch kleiner als die Länge Lₒ des Aufhängeteiles (42).

9. Anschluss nach Anspruch 7 oder 8, wobei der Winkel α, der zwischen der Längsrichtung der Einführungsnut (44) und dem Durchlaufkanal (50) eingeschlossen ist, im Bereich zwischen 25° und 155° liegt.

10. Anschluss nach einem der Ansprüche 3 bis 9, wobei die erste Drehkammer (46) einen Schließraum (48) umfasst und gestaltet ist, um ein Schließelement aufzunehmen, welches die erste Drehkammer zumindest teilweise ausfüllt, derart, dass ein ungenügender Platz in der ersten Drehkammerverbleibt, um einem Aufhängeteil (42) zu ermöglichen, darin aufgenommen zu werden.

11. Anschluss nach Anspruch 10, wobei das Schließelement (54) einen Einführungsteil (56), der in den Schließraum (48) einführbar ist, und einen Kopfteil (58) umfasst und wobei der Kopfteil gestaltet ist, um die erste Drehkammer (46) zumindest teilweise auszufüllen.

## Revendications

1. Raccord (14) pour un puits de drainage (1), un caniveau ou autre, comprenant un logement avec un manchon de tuyauterie de sortie (16) destiné à assurer le raccordement d'une tuyauterie de sortie (18) à un réseau d'égout, et une pré-chambre (20) formant le raccordement d'écoulement d'eau entre le manchon de tuyauterie de sortie et l'intérieur du puits de drainage, du caniveau ou autre, et comprenant un clapet anti-odeurs (24) arrivant à un niveau au-dessous du manchon de tuyauterie de sortie et comportant, de chaque côté, des parties de suspension (42) qui sont agencées horizontalement, en ligne l'une avec l'autre, et avec lesquelles le clapet est monté de manière amovible et de manière à pouvoir basculer dans des espaces de réception sur la surface interne de la pré-chambre, accessibles par l'intermédiaire de rainures d'insertion,
**caractérisé en ce que**
les parties de suspension (42) présentent une forme sensiblement allongée avec une longueur Lₒ s'étendant dans une direction longitudinale le long d'un bord latéral du clapet anti-odeurs et une largeur Bₒ s'étendant sur l'épaisseur du clapet anti-odeurs ; et
dans lequel les rainures d'insertion (44) présentent une largeur Bₛ qui est supérieure à la largeur Bₒ des parties de suspension mais inférieure à la longueur Lₒ des parties de suspension.

2. Raccord selon la revendication 1, dans lequel les rainures d'insertion sont agencies suivant un angle β de 65°à 115° par rapport à une paroi avant (31) de la pré-chambre (20).

3. Raccordement selon la revendication 1 ou 2, dans lequel la rainure d'insertion (44), au niveau de l'extrémité externe agencée à l'opposé de la paroi (31) de la pré-chambre (20), est agencée de manière adjacente à une première chambre de rotation (46) dans laquelle la partie de suspension sensiblement allongée (42) peut être reçue de manière à pouvoir tourner.

4. Raccordement selon la revendication 3, dans lequel la première chambre de rotation (46) est reliée à une seconde chambre de rotation (52) dans laquelle la partie de suspension sensiblement allongée (42) peut être reçue de manière à pouvoir tourner de telle sorte que la partie de suspension (42) peut être déplacée entre la première chambre de rotation (46) et la seconde chambre de rotation (52).

5. Raccordement selon la revendication 3 ou 4, dans lequel la première chambre de rotation (46) et/ou la seconde chambre de rotation (52) sont sensiblement symétriques par rotation et présentent un diamètre interne supérieur à la longueur Lₒ de la partie de suspension (42).

6. Raccord selon la revendication 4 ou 5, dans lequel les chambres de rotation (46, 52) sont agencées sous un certain angle l'une par rapport à l'autre et la seconde chambre de rotation (52) est décalée vers l'avant dans la direction de la paroi (31) de la pré-chambre (20) par rapport à la première chambre de rotation (46).

7. Raccord selon l'une quelconque des revendications 4 à 6, dans lequel la liaison entre la première chambre de rotation (46) et la seconde chambre de rotation (52) comprend un canal traversant (50).

8. Raccord selon la revendication 7, dans lequel le canal traversant (50) présente une largeur B_{d} qui est supérieure à la largeur Bₒ de la partie de suspension (42) mais inférieure à la longueur Lₒ de la partie de suspension (42).

9. Raccord selon la revendication 7 ou 8, dans lequel l'angle α formé entre la direction longitudinale de la rainure d'insertion (44) et le canal traversant (50) est compris dans la plage de 25° à 155°.

10. Raccord selon l'une quelconque des revendications 3 à 9, dans lequel la première chambre de rotation (46) comprend une chambre de fermeture (48) et est configurée de manière à recevoir un élément de fermeture qui remplit au moins partiellement la première chambre de rotation de telle sorte qu'il reste un espace insuffisant dans la première chambre de rotation pour permettre à une partie de suspension (42) d'être reçue à l'intérieur.

11. Raccord selon la revendication 10, dans lequel l'élément de fermeture (54) comprend une partie d'insertion (56) pouvant être insérée dans la chambre de fermeture (48) et une partie de tête (58), et dans lequel la partie de tête est configurée de manière à remplir au moins partiellement la première chambre de rotation (46).
